# EUROPEAN PATENT APPLICATION

(11) **EP 2 977 987 A1**
(43) Date of publication of application: **27.01.2016**
(21) Application number: 15177739.8
(22) Date of filing: 21.07.2015
(51) Int. Cl.: G11B 27/28, G06F 17/30, G11B 27/34

(54) **METHOD AND APPARATUS FOR DISPLAYING VIDEO**

(30) Priority: 22.07.2014 KR 20140092798
(71) Applicant: Samsung Electronics Co., Ltd, Gyeonggi-do 443-742 (KR)
(72) Inventor: JIN, Pyeonggyu, 443-742 Gyeonggi-do (KR); KIM, Heangsu, 443-742 Gyeonggi-do (KR); PARK, Taegun, 443-742 Gyeonggi-do (KR)
(74) Representative: Gover, Richard Paul

(57) **Abstract**

A method and an apparatus for displaying a video in an electronic device are provided. The method includes extracting at least one key frame from at least one video, and determining whether there is a portrait frame containing person information among the extracted at least one key frame. If there is the portrait frame containing the person information, the apparatus displays the portrait frame containing the person information as a representative image of the at least one video.

## Description

### TECHNICAL FIELD

The present disclosure relates to a method and apparatus for displaying a video in an electronic device.

### BACKGROUND

With recent advances in communication technologies and related storage media, electronic devices such as smart phones are now offering collectively an internet service, a navigation service, a short-range communication function, a multimedia playback function, and the like. Therefore, a user can store large files in his or her electronic device and also use, in real time, various kinds of multimedia data through a wireless internet service. Especially, among contents available for electronic devices, the utilization of video data such as movies, broadcast programs, music videos, webcasting, and the like is growing explosively.

A user who wants to play a video may select a desired video file by referring to a representative image of a video. However, in most cases, such a representative image merely uses a cover or initial image of a video, and hence this image may often fail to substantially reflect the content of a video. For example, such a typical method for a video display makes it difficult to know from the representative image whether a person of interest, for example, a particular actor or musician, appears or not in the video. Accordingly, there are increasing demands for an improvement in video display technology.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and apparatus for displaying a video can allow a representative image of a video to use a key frame containing a person image. Through this, a user can easily identify desired content and thus utilize data more effectively.

In accordance with an aspect of the present disclosure, a method for displaying a video is provided. The method includes extracting at least one key frame from at least one video, determining whether there is a portrait frame containing person information among the extracted at least one key frame, and if there is the portrait frame containing the person information, displaying the portrait frame containing the person information as a representative image of the at least one video.

In accordance with another aspect of the present disclosure, an apparatus for displaying a video is provided. The apparatus includes a control unit configured to extract at least one key frame from at least one video, to determine whether there is a portrait frame containing person information among the extracted at least one key frame, and if there is the portrait frame containing the person information, to display the portrait frame containing the person information as a representative image of the at least one video, and a display unit configured to display the portrait frame containing the person information under control of the control unit.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating a system for displaying a video list according to an embodiment of the present disclosure;
FIG. 2 is a block diagram illustrating an electronic device according to an embodiment of the present disclosure;
FIG. 3 is a flow diagram illustrating a method for displaying a video according to an embodiment of the present disclosure;
FIG. 4 is a diagram illustrating the operation of extracting a key frame according to an embodiment of the present disclosure;
FIGS. 5A, 5B, and 5C are reference diagrams illustrating the operation of changing a representative image of a video according to various embodiments of the present disclosure;
FIGS. 6A and 6B are screenshots illustrating a video list displayed as the result of an internet search according to various embodiments of the present disclosure; and
FIG. 7 is a screenshot illustrating the operation of playing a video according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the present disclosure, the term 'frame' refers to one of still images that constitute a video. When a video is being played, each frame is seen for a very short time and replaced immediately with the next frame. Therefore, by an afterimage effect, images of respective frames seem to be continuously connected. Particularly, the term 'key frame' will be used as a term for indicating a specific frame forming the core of a motion, such as the initial frame, the last frame, or the like, among the whole set of frames constituting a video.

Additionally, the term 'portrait frame' will be used as a term for indicating a frame that contains therein an image of a person among key frames that constitute a video.

Furthermore, the term 'shortcut image' will be used as a term for indicating an image linked to a specific playback position on a video playback screen.

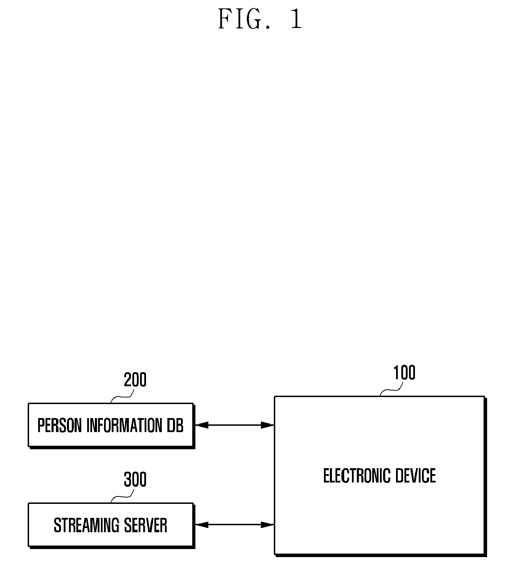

FIG. 1 is a block diagram illustrating a system for displaying a video list according to an embodiment of the present disclosure.

The system may be formed of an electronic device 100, a person information database (DB) 200, and a streaming server 300.

The electronic device 100 may receive video data from the streaming server 300 and also include a suitable codec for decoding video data and outputting the decoded data to the screen. Therefore, the electronic device 100 may play video data which are either stored therein or received from the outside.

In addition, the electronic device 100 may extract at least one key frame from frames of certain video data. Also, the electronic device 100 may search for a portrait frame having a recognized face therein, among the extracted key frames. Also, the electronic device 100 may search for a portrait frame that has therein face information of a specific person. In order to identify a face of a specific person from images, the electronic device 100 can receive necessary information from the person information DB 200.

The person information DB 200 may store therein information required for expressing a representative image of each video as a portrait frame having a specific person image when the electronic device 100 displays a video list in an embodiment of the present disclosure. The person information DB 200 may be separated from or embedded in the electronic device 100 and used for determining whether each of the extracted key frames is a portrait frame that contains a specific person image. The person information DB 200 may store therein face feature information to be used for face recognition of a specific person.

The streaming server 300 refers to a server that exists at the outside of the electronic device 100 and provides video data to the electronic device 100. When a data request signal is received from the electronic device 100, the streaming server 300 may offer corresponding video data to the electronic device 100.

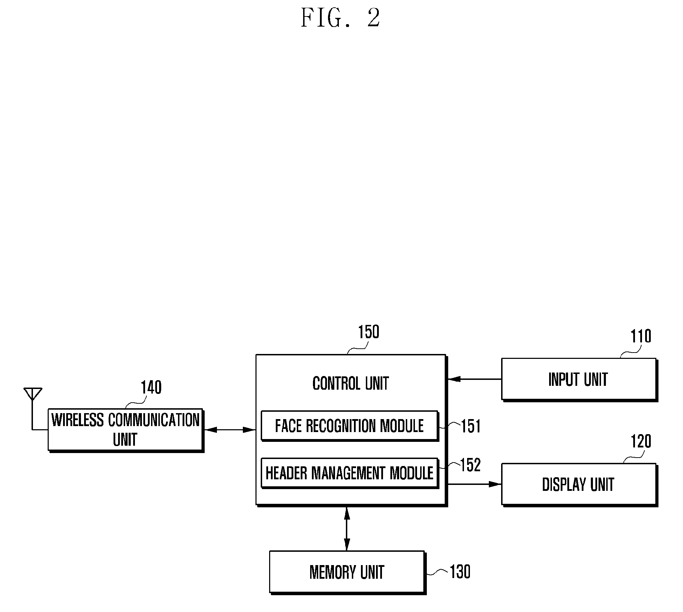

FIG. 2 is a block diagram illustrating an electronic device according to an embodiment of the present disclosure.

Referring to FIG. 2, the electronic device 100 may include, for example, but is not limited to, an input unit 110, a display unit 120, a memory unit 130, a wireless communication unit 140, and a control unit 150. Additionally, the control unit 150 may include therein a face recognition module 151 and a header management module 152.

The input unit 110 may receive a user's input, create a corresponding input signal, and enter the input signal in the electronic device 100. In an embodiment of the present disclosure, the input unit 110 may enter a keyword input for a video search.

The display unit 120 may be formed of Liquid Crystal Display (LCD), Light Emitting Diode (LED), Organic LED (OLED), Active Matrix OLED (AMOLED), or the like. The display unit 120 may visually offer various kinds of data, e.g., images, videos, etc., to a user. In an embodiment of the present disclosure, the display unit 120 may output a specific image as a representative image of a video when a search result page contains such a video. This representative image may use a portrait frame.

The memory unit 130 stores therein various programs and data required for the operation of the electronic device 100. In an embodiment of the present disclosure, the memory unit 130 may store various types of video data. Also, the memory unit 130 may store a specific program and data required for extracting a key frame from frames of video data. Also, the memory unit 130 may store person information received from the person information DB 200 to find a portrait frame having a specific person image.

The wireless communication unit 140 may include a Radio Frequency (RF) transceiver which up-converts the frequency of an outgoing signal and then amplifies the signal and which amplifies with low-noise an incoming signal and down-converts the frequency of the signal. In an embodiment of the present disclosure, the wireless communication unit 140 may perform a communication with the streaming server 300 which is located separate from the electronic device. Then the wireless communication unit 140 may receive video data from the streaming server 300 and display the received video data on the display unit 120. Additionally, the wireless communication unit 140 may receive, from the person information DB 200, information (e.g., feature information of a face) required for face recognition of a specific person. Then the wireless communication unit 140 may offer the received information to the control unit 150 that searches for a portrait frame corresponding to a specific person.

The control unit 150 controls the overall operation of the electronic device 100. In an embodiment of the present disclosure, in order to display a video list, the control unit 150 may extract key frames from a video and check whether the extracted key frames include a portrait frame having a person image. Additionally, in case a representative image of a video is not a portrait frame, the control unit 150 may replace the representative image with a portrait frame. Also, the control unit 150 may retrieve a portrait frame from video data and control the retrieved portrait frame to be displayed as a shortcut image on a video playback screen.

As mentioned above, the control unit 150 may include the face recognition module 151 and the header management module 152. In case of a search for a person image corresponding to a specific keyword, the face recognition module 151 may check, based on the person information DB 200, whether a face contained in an image is identical with a face image of a specific person more than a given similarity. Alternatively or additionally, any other well-known technique may be used for face recognition. Meanwhile, the header management module 152 may recognize header information in video data and change a representative image contained in the header information.

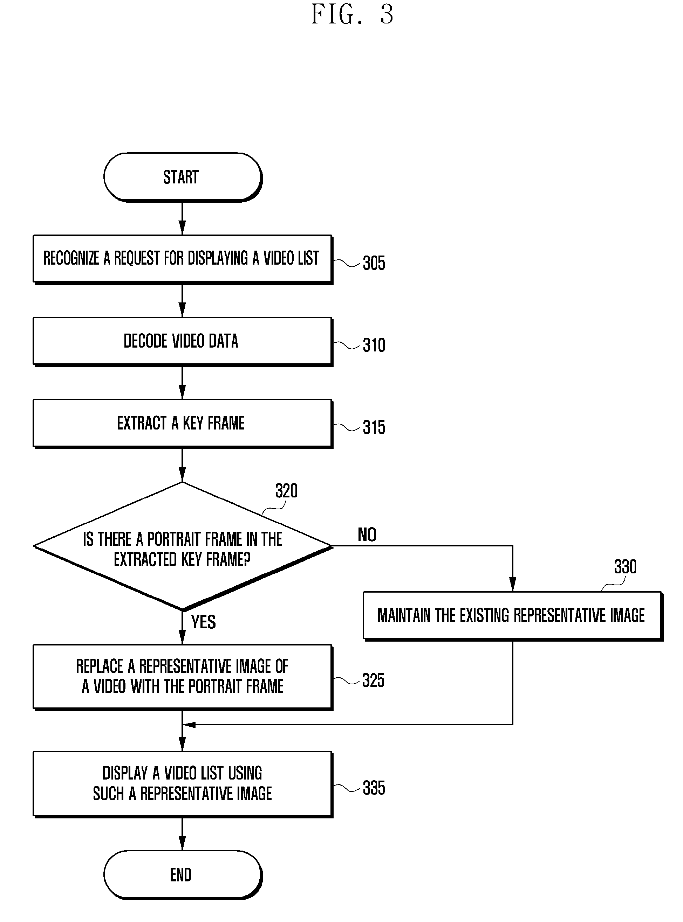

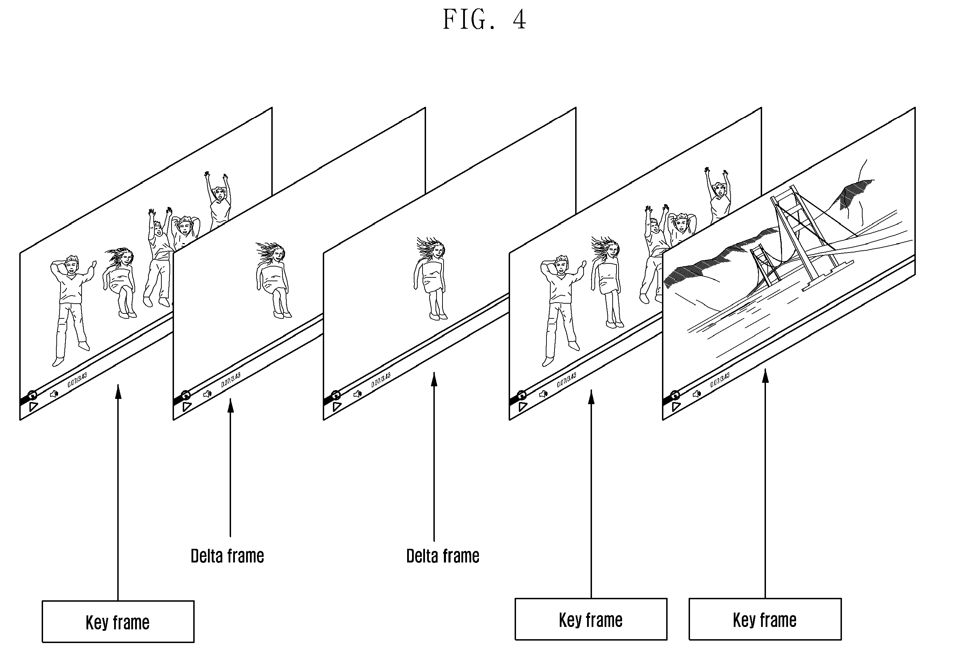

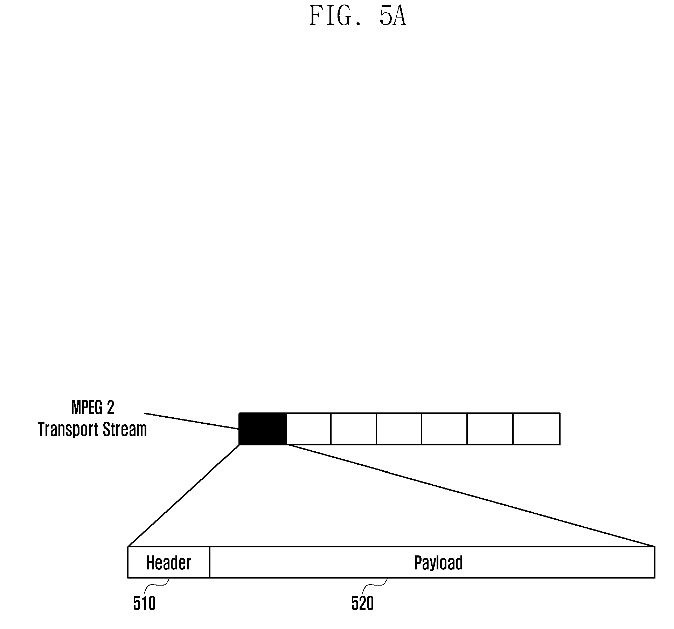

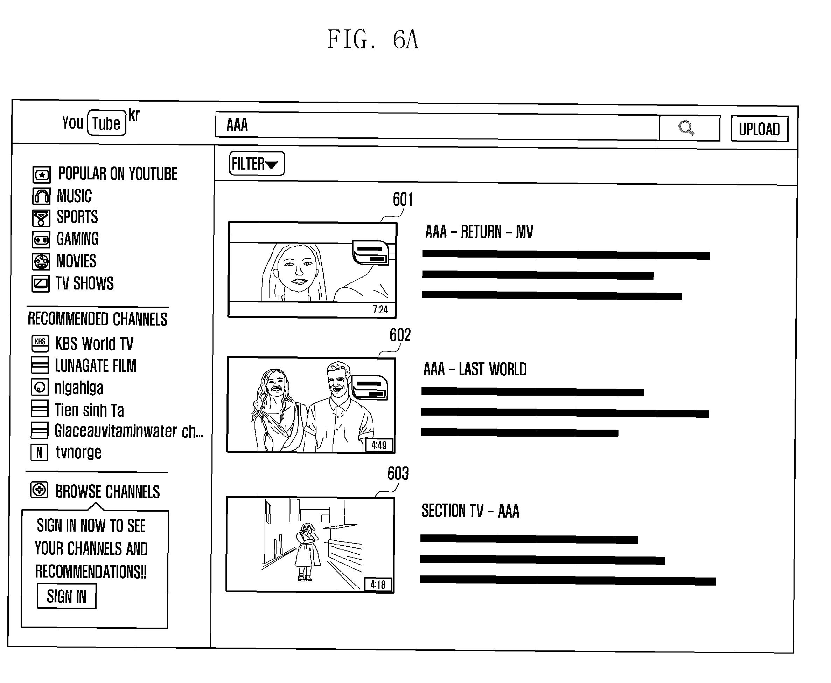

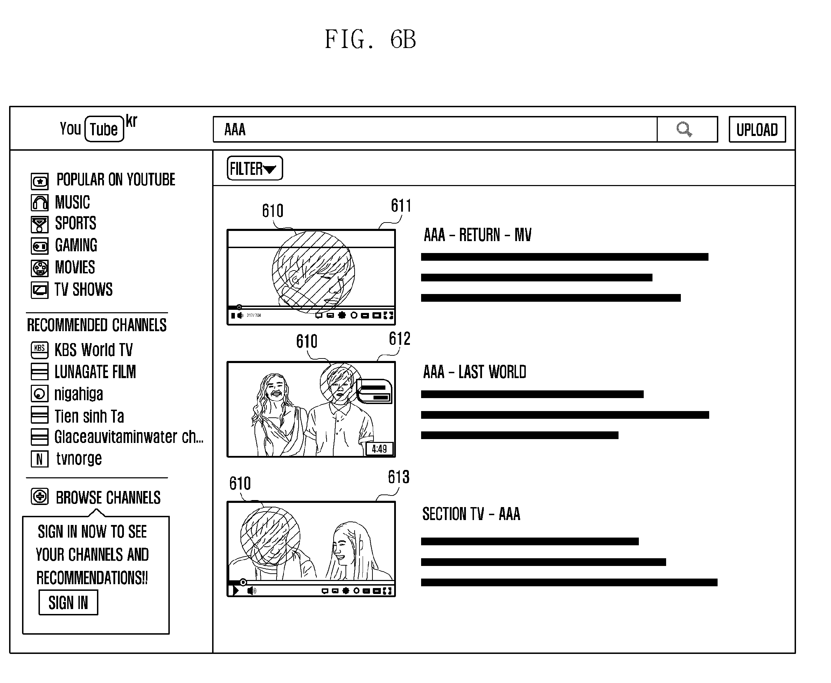

FIG. 3 is a flow diagram illustrating a method for displaying a video according to an embodiment of the present disclosure. FIG. 4 is a diagram illustrating the operation of extracting a key frame according to an embodiment of the present disclosure. FIGS. 5A to 5C are reference diagrams illustrating the operation of changing a representative image of a video according to various embodiments of the present disclosure. FIGS. 6A and 6B are screenshots illustrating a video list displayed as the result of an internet search according to various embodiments of the present disclosure.

Referring to FIG. 3, at operation 305, the control unit 150 of the electronic device 100 may recognize a request for a video list display. This request for a video list display may be a user's input for displaying a list of video data stored in the electronic device 100. Additionally, in case the control unit 150 offers a video list as the result of a search in internet sites or web pages, this may be regarded as the above request for a video list display.

After the request for a video list display is recognized, the control unit 150 may decode video data at operation 310. If any requested video is stored in the electronic device 100, such a decoding process may be performed immediately. However, if any requested video is received from the streaming server 300 (e.g., in case of a request for a video list display via internet), the control unit 150 may download a certain quantity of video data from the streaming server 300 through the wireless communication unit 140. The download quantity may correspond to only a part of all frames of the video data and does not greatly affect a download speed and a storage volume. The control unit 150 may decode only such a downloaded part. A decoding process for displaying a list of videos received from the streaming server 300 may thus be somewhat different from a decoding process for displaying a list of videos stored in the electronic device 100.

After decoding video data, the control unit 150 may extract at least one key frame from the decoded video data at operation 315. This extraction operation will be now described with reference to FIG. 4.

Referring to FIG. 4, a video may be formed of a plurality of frames. Namely, a video may be composed of a key frame forming the core of a motion and a delta frame assisting a natural motion between adjacent key frames so that still images look like being moved. Since video data have a key frame and a delta frame, the control unit 150 can extract a key frame only from all frames that constitute such video data.

After extracting the key frame, the control unit 150 may determine at operation 320 whether there is a portrait frame in the extracted key frames. At operation 320, the control unit 150 can search for any portrait frame containing a person image and can also search for a portrait frame containing a specific person image. For example, in the case that a video list is offered as the result of a search for a specific person, a portrait frame found by the control unit 150 may be a frame that contains an image of the specific person. For checking whether a certain image is matched with an image of the specific person, the control unit 150 may refer to data in the person information DB 200. The person information DB 200 may be managed in the electronic device 100 or by any external server. Face recognition techniques using image data of a specific person are well known in the art and hence a detailed description thereof will be omitted herein. Using a face recognition function, the control unit 150 may check whether a certain video contains a portrait frame having an image of a specific person. The portrait frame checked at operation 320 by the control unit 150 may be either a portrait frame having an image of a specific person or a portrait frame having an image of any person, depending on a user's setting or situation.

If there is a portrait frame, the control unit 150 may replace a representative image of a video with the portrait frame at operation 325. This operation will be now described with reference to FIGS. 5A to 5C.

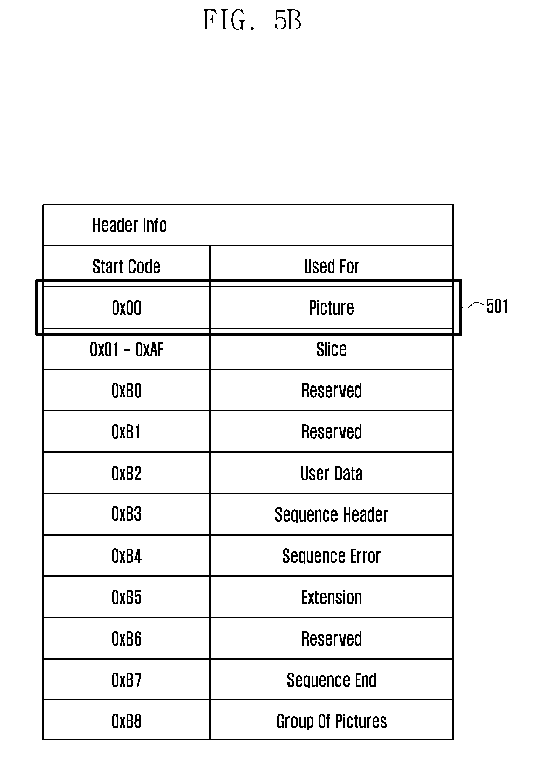

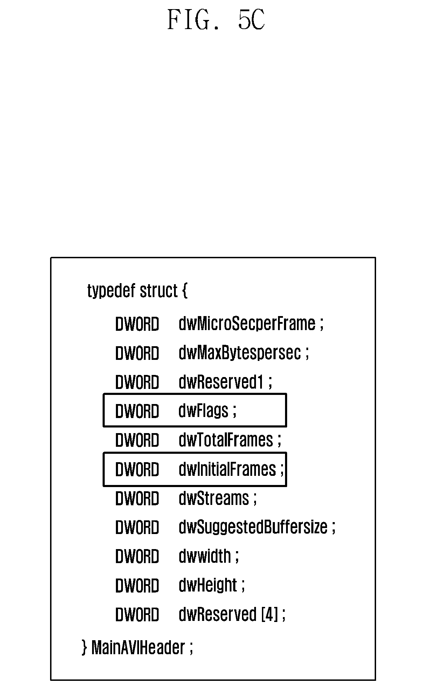

FIG. 5A shows the structure of video data. As shown, video data may be formed of transport streams which are encoded and packetized from video content. Additionally, the transport stream may be composed of a header 510 and a payload 520. The header 510 contains information about identification such as a format of video content, and the payload 520 is substantive video data. Further, the header 510 contains information associated with a representative image of a video. The header 510 may have a structure as shown in FIGS. 5B or 5C. In FIG. 5B, if a start code 501 is '0x00', this means that a representative image is a picture (a still image, a frame). If any portrait frame is found in the extracted key frames, the control unit 150 may replace the existing representative image with the found portrait frame.

Additionally, the form of the header may be varied depending on the format of a video file. FIG. 5C shows a header structure of other type video file in comparison with FIG. 5B. As shown in FIG. 5C, the header may contain information corresponding to a representative image. The control unit 150 may replace a predefined representative image with a portrait frame. This portrait frame applied to the representative image may, for example, have the most leading playback position among all found portrait frames.

Meanwhile, at operation 320, no portrait frame may be found in the extracted key frames. For example, in the case that a video received from the streaming server 300 is displayed, data decoded to search for a portrait frame by the control unit 150 may correspond to only a few of the video data. Therefore, if any portrait frame is not found in such partial video data to be used for decoding, the control unit 150 may determine that no portrait frame is found in the video. Then, at operation 330, the control unit 150 may maintain the existing representative image of a video.

After operation 325 or 330 is completed, the control unit 150 may display a video list using such a representative image on the display unit 120 at operation 335. FIGS. 6A and 6B specifically show results of the above operation.

If a search keyword relates to a person in case a video list is displayed as a search result in various embodiments, the control unit 150 may check whether a portrait frame contains a person image corresponding to the search keyword in a search for a portrait frame. Then the control unit 150 may replace a representative image with a portrait frame containing a person image corresponding to the search keyword and then display the portrait frame as a representative image on the screen. FIG. 6A shows a video list in which a representative image changing function is inactivated. Referring to FIG. 6A, a search keyword 'AAA' is entered. Then the control unit 150 may display, on an internet page, a list of videos corresponding to the search results of the keyword 'AAA'. In this case, videos shown in FIG. 6A are expressed as predetermined representative images 601, 602, and 603 which may be unconnected with the search keyword 'AAA'.

FIG. 6B shows case in which a representative image changing function is activated. In this case, when a search keyword 'AAA' is entered, representative images 611, 612, and 613 of videos contain specific images 610 associated with the keyword 'AAA'. As discussed hereinbefore, the reason is that, in case of searching for a specific person, the control unit 150 extracts a portrait frame having an image of the specific person from each video to be displayed as search results and then replaces a representative image of each video with the extracted portrait frame.

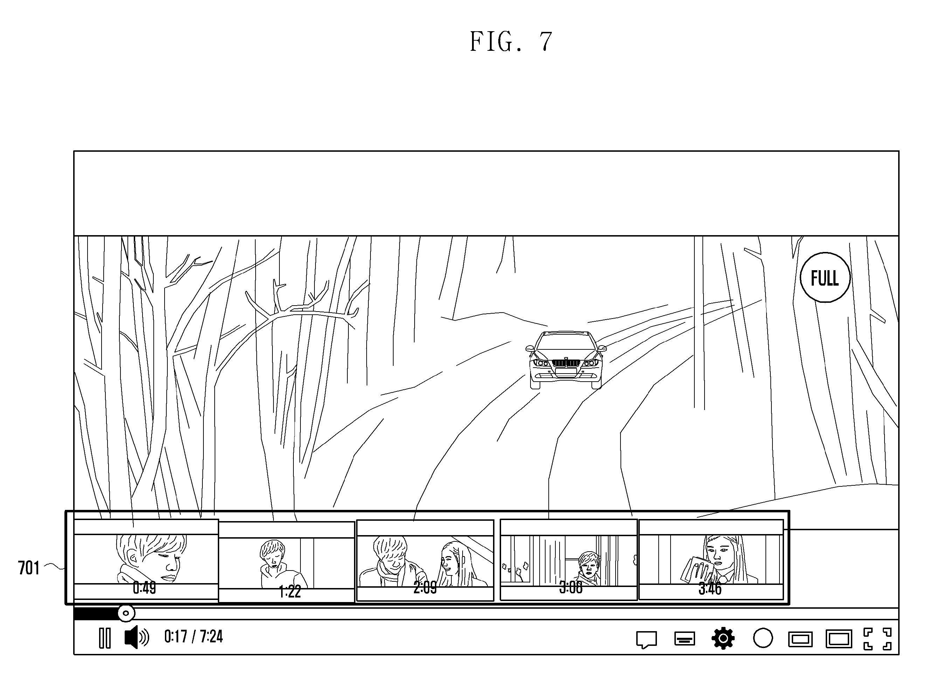

FIG. 7 is a screenshot illustrating the operation of playing a video according to an embodiment of the present disclosure.

When a video is played in various embodiments, the control unit 150 may change shortcut images 701 displayed at intervals. FIG. 7 shows the shortcut images 701 formed of portrait images only. Like the replacement of a representative image, the operation of changing the shortcut images 701 may be performed through a search for a portrait frame containing a person image in a decoding process for a video playback.

A user can select the shortcut image 701 expressed as a portrait image. If one of the shortcut images is contained in playback information, the control unit 150 may perform the playback of a video from a position of the selected portrait frame. Even in the case that a streaming video is played through the streaming server 300, the control unit 150 may extract a portrait frame by decoding video data downloaded in real time. Also, at each position where a person image of the extracted portrait image is changed, the control unit 150 may display the frame as the shortcut image 701. Meanwhile, in case a video is played as the result of a search for a specific person, the control unit 150 may form the shortcut image 701 from only frames containing an image of the specific person.

As discussed hereinbefore, the video display method and apparatus according to various embodiments of the present disclosure allow video data to be utilized more effectively by displaying a list of videos on the basis of a person image.

The above-discussed various embodiments of the present disclosure may be implemented by a command stored in a non-transitory computer-readable storage medium in a programming module form. When the command is executed by one or more processors, the one or more processors may execute a function corresponding to the command. The non-transitory computer-readable storage medium may be, for example, a memory unit or a storage unit. At least a part of the programming module may be implemented by, for example, the processor. At least a part of the programming module may include, for example, a module, a program, a routine, a set of instructions, and/or a process for performing one or more functions.

The non-transitory computer-readable recording medium may include magnetic media such as a hard disk, a floppy disk, and a magnetic tape, optical media such as a Compact Disc Read Only Memory (CD-ROM) and a Digital Versatile Disc (DVD), magneto-optical media such as a floptical disk, and hardware devices specially configured to store and perform a program instruction (for example, e.g., programming module), such as a ROM, a Random Access Memory (RAM), a flash memory and the like. In addition, the program instructions may include high class language codes, which can be executed in a computer by using an interpreter, as well as machine codes made by a compiler. The aforementioned hardware device may be configured to operate as one or more software modules in order to perform the operation of various embodiments of the present disclosure, and vice versa.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for displaying a video, the method comprising:
extracting at least one key frame from at least one video;
determining whether there is a portrait frame containing person information among the extracted at least one key frame; and
if there is the portrait frame containing the person information, displaying the portrait frame containing the person information as a representative image of the at least one video.

2. The method of claim 1, wherein the request for displaying the video list includes at least one of a request for displaying a list of videos stored in an electronic device and a request for receiving videos from a streaming server, and then displaying a list of the received videos.

3. The method of claim 1, wherein displaying of the video list includes, if there is the portrait frame containing the person information, replacing a default representative image of the at least one video with the portrait frame.

4. The method of claim 3, wherein the replacing of the default representative image with the portrait frame includes changing location information of the representative image contained in a header of the video to location information of a leading portrait frame among portrait frames containing the person information.

5. The method of claim 1, further comprising:
if a search for a specific person is performed, determining whether there is a portrait frame containing an image of the specific person; and
replacing a default representative image of the video with the portrait frame containing the image of the specific person.

6. The method of claim 5, wherein the determining of whether there is the portrait frame containing the image of the specific person includes comparing, based on a person information database, face feature information of the specific person with face feature information of a person contained in the portrait frame.

7. The method of claim 1, further comprising:
changing a shortcut image to the portrait frame containing the person information.

8. The method of claim 7, wherein the changing of the shortcut image includes setting a location of the shortcut image to a position where a person in the portrait frame is changed.

9. The method of claim 7, wherein the changing of the shortcut image includes changing the shortcut image to the portrait frame containing an image of a specific person.

10. An apparatus for displaying a video, the apparatus comprising:
a control unit configured to extract at least one key frame from at least one video, to determine whether there is a portrait frame containing person information among the extracted at least one key frame, and if there is the portrait frame containing the person information, to display the portrait frame containing the person information as a representative image of the at least one video; and
a display unit configured to display the representative image using the portrait frame containing the person information under control of the control unit.

11. The apparatus of claim 10, further comprising:
a memory unit configured to store therein the at least one video; and
a wireless communication unit configured to receive the at least one video from a streaming server.

12. The apparatus of claim 10, wherein the control unit is further configured, if there is the portrait frame containing the person information, to replace a default representative image of the at least one video with the portrait frame when the video list is displayed.

13. The apparatus of claim 10, wherein the control unit is further configured to change location information of the representative image contained in a header of the video to location information of a leading portrait frame among portrait frames containing the person information.

14. The apparatus of claim 10, wherein the control unit is further configured, if a search for a specific person is performed, to determine whether there is a portrait frame containing an image of the specific person, and to replace a default representative image of the video with the portrait frame containing the image of the specific person.

15. The apparatus of claim 14, wherein the control unit is further configured, if the search for the specific person is performed, to control the wireless communication unit to receive face feature information of the specific person from a person information database, and to compare received face feature information with face feature information of a person contained in the portrait frame.
